# EUROPEAN PATENT APPLICATION

(11) **EP 2 857 881 A1**
(43) Date of publication of application: **08.04.2015**
(21) Application number: 13793560.7
(22) Date of filing: 25.04.2013
(51) Int. Cl.: G02B 6/44

(54) **FULLY DRY, CENTRAL TUBE-TYPE AIR BLOWN MICRO OPTICAL FIBER**

(30) Priority: 24.05.2012 CN 201220235476 U
(71) Applicant: Yangtze Optical Fibre and Cable Joint Stock Limited Company, Hongshan District Wuhan, Hubei 430073 (CN)
(72) Inventor: RUAN, Yunfang, Wuhan Hubei 430073 (CN); CHEN, Feng, Wuhan Hubei 430073 (CN); LU, Xingxing, Wuhan Hubei 430073 (CN); XIONG, Zhuang, Wuhan Hubei 430073 (CN)
(74) Representative: Laufhütte, Dieter
(86) International application number: PCT/CN2013/074669
(87) International publication number: WO 2013/174193

(57) **Abstract**

The present invention is related to an all-dry central tube air blown micro optical cable. The cable consists of an outer sheath and a loose tube which is covered in the outer sheath and inside which the fibers are set, and is characterized in that the water-blocking yarns are coated inside the loose tube and the longitudinal grooves are provided in the outer surface of the outer sheath circumferentially. Compared with conventional cables, the cable according to present invention has a smaller diameter and the less weight, and can be installed in the plastic tubes of 5/3.5 mm or even less at a longer distances. The longitudinal grooves in the outer surface of the outer sheath are not only helpful for the stripping of the optical cable, but also reduce the friction between the optical cable and the wall of the tube in the process of air blown, thereby facilitate the air flow. Furthermore, the use of the sheath material with lower coefficient of friction reduces the drag force of air blown, thus further increases the laying distances of the optical cable. The use of the water-blocking yarns avoids cleaning in the process of fiber splicing, thus greatly reduces splicing time and improves the efficiency of constructions. The cable according to present invention occupies less duct resources and lowers the cost of constructions.

## Description

### TECHNICAL FIELD

The invention relates to an all-dry central tube air blown micro optical cable which can be used for air blown installation in a micro plastic duct.

### BACKGROUND

With the rapid development of the fiber to the home (FTTH), in metropolitan area network and access network, the micro optical cable has been greatly used by air blown installation. Due to the limitations of duct resources, long distance of air blown and convenience for use are the requirements for all cable products. Existing air blown micro optical cable has 2 kinds of structures: stranded and central tubed. The stranded micro cable has a larger diameter which is generally greater than about 5 mm, and the cable is merely blown in a 10/8 mm duct. Central tube micro cable has smaller diameter, approximately 4.0 mm, and the cable is merely air blown in a 7/5.5 mm duct. In the FTTH constructions overseas, almost all the air blown tubes used in the home are 5/3.5 tubes. Furthermore, the construction environment is complex. Because traditional central tube air blown micro cable has a larger diameter and the contact area between the surface of the optical cable and the duct is large, the friction is great, the distance of air blown is short. Also, because gel is contained in the sheath, when the optical fiber is spliced, cleaning the gel takes too much time and the environmental pollution occurs.

### SUMMARY

The technical problem to be resolved by the present invention is to provide a all-dry central tube air blown micro optical cable. The cable has some advantages such as good laying performance, long air blown distance, simple structure and convenience for use.

The technical solution adopted to resolve the above problem by the present invention is that the cable includes an outer sheath and a loose tube which is covered inside the outer sheath and inside which the optical fibers are set, and is characterized in that the water-blocking yarns are coated inside the loose tube and the longitudinal grooves are provided in the outer surface of the outer sheath circumferentially.

In some embodiments, the diameter of the outer sheath is 2.0 mm to 2.8 mm.

In some embodiments, the diameter of the loose tube is 1.4 mm to 2.2 mm.

In some embodiments, a tension member is provided between the outer sheath and the loose tube on the basis of the tension.

In some embodiments, the number of the optical fiber is 1-12.

In some embodiments, the number of the longitudinal grooves is 4-36, the maximum width of the longitudinal grooves is 0.05 mm to 1.2 mm, and the radial depth of the longitudinal grooves is 0.05 mmto1.0 mm.

In some embodiments, the outer sheath is made of high-density polyethylene (HDPE) or halogen-free flame retardant materials.

The advantages of the cables according to present invention comprises: 1) the diameter is small and the weight is light, thus air blown installation can be done in 5/3.5 mm or even less plastic tubes at a longer distance; 2) the longitudinal grooves in the surfaces of the outer sheath are not only helpful for the stripping of the optical cable, but also reduce the friction between the optical cable and the wall of the duct in the process of air blown, thus facilitate the air flown and further increase the air blown distance; 3) the water-blocking yarns are coated inside the loose tube instead of gel, thereby reduce the cleaning in the process of splicing, save the construction time, improve the construction efficiency and decrease the construction cost; 4) the cable meets the requirements of low carbon and environmental protection, and is flame retardant.

### DESCRIPTION OF THE DRAWING

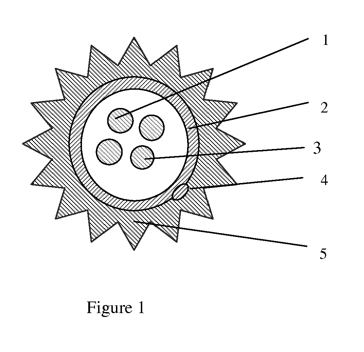

Figure 1 is the cross section of the cable according to the present invention.

### EMBODIMENTS

The embodiment of the present invention is further illustrated below.

The cable includes an outer sheath (5) and a loose tube (2) which is covered inside the outer sheath and inside which three fibers (1) are set. The diameter of the outer sheath is 2.4 mm, the diameter of the loose tube is 1.8 mm, and water-blocking yarns (3) are included inside the loose tube. The outer sheath is made of high-density polyethylene (HDPE) or low-smoke halogen-free flame retardant materials. The longitudinal grooves are provided in the outer surface of the outer sheath circumferentially, the number of the longitudinal grooves is 20, the cross section of the longitudinal grooves is triangle, the maximum width of the longitudinal grooves is 0.2 mm and the radial depth of the longitudinal grooves is 0.2 mm. The tension members (4) are disposed between the outer sheath and the loose tube, the number of the tension members is 1-2, and the tension members are made of aramid yarns or other non-metallic materials.

## Claims

1. An all-dry central tube air blown micro optical cable, comprising an outer sheath and a loose tube which is covered in the outer sheath and inside which fibers are set,**characterized in that** water-blocking yarns are coated in the loose tube, and that longitudinal grooves are provided in the outer surface of the outer sheath circumferentially.

2. The all-dry central tube air blown micro optical cable according to claim 1, **characterized in that** the diameter of the outer sheath is 2.0 mm to 2.8 mm.

3. The all-dry central tube air blown micro optical cable according to claims 1 or 2, **characterized in that** the diameter of the loose tube is 1.4 mm to 2.2 mm.

4. The all-dry central tube air blown micro optical cable according to claims 1 or 2, **characterized in that** at least one tension member is provided between the outer sheath and the loose tube.

5. The all-dry central tube air blown micro optical cable according to claims 1 or 2, **characterized in that** the number of the optical fibers is 1-12.

6. The all-dry central tube air blown micro optical cable according to claims 1 or 2, **characterized in that** the number of the longitudinal grooves is 4-36, the maximum width of longitudinal grooves is 0.05 mm to 1.2 mm, and the radial depth of the longitudinal grooves is 0.05 mm to 1.0 mm.

7. The all-dry central tube air blown micro optical cable according to claim 6, **characterized in that** the outer sheath is made of high-density polyethylene (HDPE) or halogen-free flame retardant materials.
